# EUROPEAN PATENT APPLICATION

(11) **EP 4 576 648 A1**
(43) Date of publication of application: **25.06.2025**
(21) Application number: 24211621.8
(22) Date of filing: 08.11.2024
(51) Int. Cl.: H04L 9/00, H04L 9/40, H04L 9/32, G06F 21/62

(54) **DATA MANAGEMENT APPARATUS AND DATA MANAGEMENT METHOD**

(30) Priority: 21.12.2023 JP 2023215564
(71) Applicant: TOYOTA JIDOSHA KABUSHIKI KAISHA, Aichi-ken, 471-8571 (JP)
(72) Inventor: YAMAMURO, Naoki, Aichi-ken, 471 8571 Japan (JP); MATSUMOTO, Shigeki, Aichi-ken, 471 8571 (JP); NAKANISHI, Yohei, Aichi-ken, 471 8571 (JP); FUKATSU, Wataru, Aichi-ken, 471 8571 (JP)
(74) Representative: D Young & Co LLP

(57) **Abstract**

A virtual server (31A) includes a storage (54) storing: log data (an access history (71)) indicating an occurrence of an event (access) involving a monitored file; and a distributed ledger (81), and a processor (51) that updates the distributed ledger (81). The processor (51) stores transaction data generated from the log data into the distributed ledger (81).

## Description

### CROSS REFERENCE TO RELATED APPLICATIONS

This nonprovisional application is based on Japanese Patent Application No. 2023-215564 filed on December 21, 2023 with the Japan Patent Office, the entire content of which is hereby incorporated by reference.

### BACKGROUND

The present disclosure relates to a data management apparatus and a data management method, and, more particularly, to a data management apparatus and a data management method using a distributed ledger technology (DLT).

### Description of the Background Art

Japanese Patent Laying-Open No. 2013-235408 discloses the log management system that includes an access log registration means. When a file storage means is accessed by a user terminal via a network, the access log registration means registers an access log, including identification information of the user terminal, the date and time of the access, and the operation type, with an access log database.

### SUMMARY

In electronic management of data, there is a constant demand that unauthorized use of data is prevented, stated differently, the authenticity of data is ensured.

The present disclosure is made to solve the above problem, and one of objectives of the present disclosure is to ensure the authenticity of data in a data management apparatus or a data management method having a distributed ledger technology applied thereto.

A data management apparatus according to a certain aspect of the present disclosure includes: a first storage storing a log data indicating an occurrence of an event involving a monitored file; a second storage storing a distributed ledger; and a processor that updates the distributed ledger. The processor stores transaction data generated from the log data into the distributed ledger.

A data management method according to another aspect of the present disclosure uses a distributed ledger technology. The data management method includes: obtaining, by a processor, log data indicating an occurrence of an event involving a monitored file; generating, by the processor, transaction data from the log data; and storing, by the processor, the transaction data into the distributed ledger.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram illustrating one example of an overall configuration of a data management system according to Embodiment 1 of the present disclosure.
Fig. 2 is a diagram illustrating one example of a configuration of a database according to Embodiment 1.
Fig. 3 is a diagram illustrating one example of a configuration of a virtual server according to Embodiment 1.
Fig. 4 is a diagram illustrating one example of a data structure of an access history.
Fig. 5 is a diagram illustrating one example of a data structure of a distributed ledger according to Embodiment 1.
Fig. 6 is a schematic diagram for illustrating a relationship between records stored in an evidence chain and an access history chain.
Fig. 7 is a flowchart illustrating one example of the procedure of a history chain update process according to Embodiment 1.
Fig. 8 is a diagram illustrating one example of an overall configuration of a data management system according to Embodiment 2 of the present disclosure.
Fig. 9 is a diagram illustrating one example of a configuration of a database according to Embodiment 2.
Fig. 10 is a diagram illustrating one example of a configuration of a virtual server according to Embodiment 2.
Fig. 11 is a diagram illustrating one example of a data structure of an inspection log.
Fig. 12 is a diagram illustrating one example of a data structure of a distributed ledger according to Embodiment 2.
Fig. 13 is a schematic diagram for illustrating a relationship between records stored in an inspection data chain and an inspection log chain.
Fig. 14 is a flowchart showing one example of the procedure of an inspection log chain update process according to Embodiment 2.

### DESCRIPTION OF THE PREFERRED EMBODIMENTS

Hereinafter, an embodiment according to the present disclosure will be described, with reference to the accompanying drawings. Note that like reference signs are used to refer to like or corresponding parts in the drawings, and the description thereof will not be repeated.

### [Embodiment 1]

### <System Configuration>

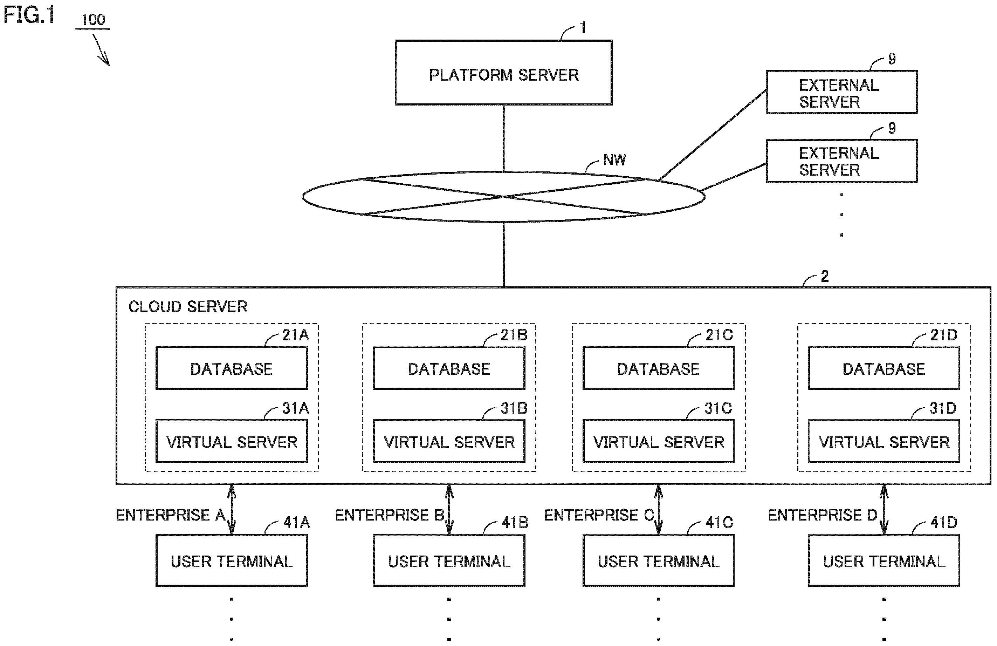

Fig. 1 is a diagram illustrating one example of an overall configuration of a data management system according to Embodiment 1 of the present disclosure. A data management system 100 uses a distributed ledger technology to manage data. More specifically, the data management system 100 uses the distributed ledger technology to monitor the presence or absence of unauthorized use of data. The data monitored by the data management system 100 will be, hereinafter, described as a "monitored file." The type and/or data format of the monitored file is not particularly limited. The monitored file may be design data for a vehicle (or a vehicle component), a vehicle control program, or a document file describing vehicle-related technical information (such as specifications, development know-how).

The data management system 100 includes, for example, a platform server 1, a cloud server 2, multiple user terminals 41A, 41B, 41C, and 41D, and multiple external servers 9.

The platform server 1 manages a network NW. The network NW is, for example, a consortium network formed among enterprises. The platform server 1 receives an application from the cloud server 2 to join the network NW. The platform server 1 permits the cloud server 2 to join the network NW, based on the operations by an administrator of the platform server 1, or based on a result of determination of predetermined conditions.

The cloud server 2, in this example, includes four databases 21A, 21B, 21C, and 21D and four virtual servers 31A, 31B, 31C, and 31D. However, the number of databases and virtual servers is not particularly limited. The databases 21A to 21D have similar configurations and functions. The same is true for the virtual servers 31A to 31D. Thus, in the following, the database 21A and the virtual server 31A will be representatively described.

The database 21A and the virtual server 31A are connected to the multiple user terminals 41A in a bidirectionally communicative manner. Each user terminal 41A is, in this example, an information processing terminal that is lent to a user (typically, an employee) belonging to an enterprise A, and, for example, a personal computer (PC), smartphone, a tablet, etc. Note that the user terminal 41A can also function as an input device and/or an output device for the cloud server 2 (the virtual server 31A).

The database 21A is a virtual storage. The database 21A is implemented by a rewriteable memory device such as a hard disk drive (HDD), a solid state drive (SSD), or a flash memory.

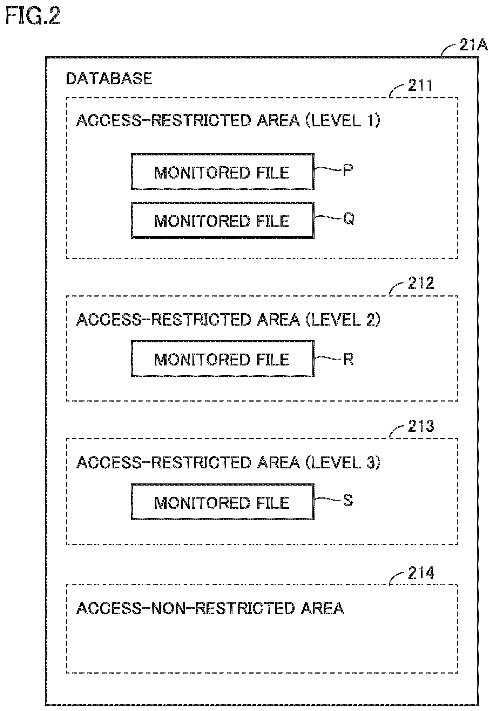

Fig. 2 is a diagram illustrating one example of a configuration of the database 21A according to Embodiment 1. The data storage area of the database 21A is divided into multiple areas. The areas include, for example, access-restricted areas 211, 212, and 213, and an access-non-restricted area 214.

The access-restricted areas 211 to 213 are storage areas only pre-authorized users are permitted to access. The access-restricted areas 211 to 213 have strong access restrictions in this order. More specifically, a user with the highest authority is permitted to access all the access-restricted areas 211 to 213. A user with a medium authority is permitted to access the access-restricted areas 212 and 213 but not permitted to access the access-restricted area 211. A user with the lowest authority is permitted to access the access-restricted area 213 but not permitted to access the access-restricted areas 211 and 212.

Desirably, the monitored file is stored in the access-restricted area. In this example, monitored files P and Q are stored in the access-restricted area 211, a monitored file R is stored in the access-restricted area 212, and a monitored file S is stored in the access-restricted area 213. In this manner, the permissions to access the monitored files P to S can be set on a per-user basis.

Returning to Fig. 1, if a user performs an operation to access any of the monitored files on the user terminal 41A, the virtual server 31A determines whether the user is authorized to access the monitored file. If the user is authorized, the virtual server 31A outputs a control signal to the database 21A, in response to the user operation. The database 21A processes the monitored file (viewing, adding, registering updating, modifying, deleting, transmitting, downloading, etc. of the file), according to the control signal from the virtual server 31A.

Distributed ledger-based software is installed in the virtual server 31A. As the distributed ledger-based software functions, the virtual server 31A functions as a node. Note that similarly to the four virtual servers 31A to 31D, the external servers 9 also have distributed ledger-based software.

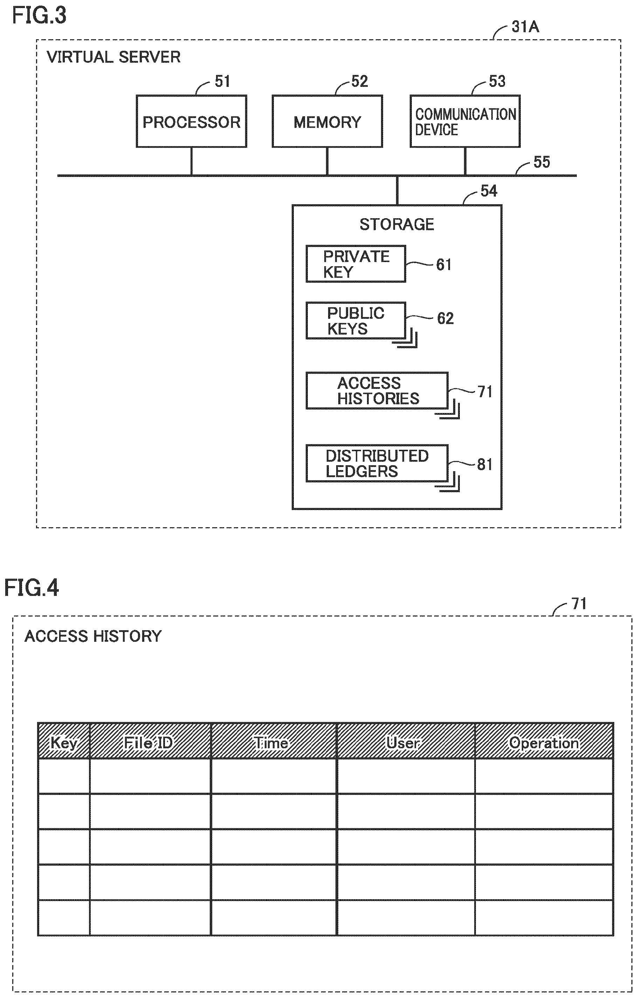

Fig. 3 is a diagram illustrating one example of a configuration of the virtual server 31A according to Embodiment 1. Referring to Figs. 1 and 3, the virtual server 31A includes a processor 51, a memory 52, a communication device 53, and a storage 54. The components of the virtual server 31A are communicatively connected to each other via a bus 55.

The processor 51 is a processing unit such as a central processing unit (CPU), a micro-processing unit (MPU), etc. The memory 52 includes a read only memory (ROM), and a random access memory (RAM). The memory 52 stores system programs, including an operating system (OS), and control programs, including computer-readable code required for the control operations. The processor 51 reads and deploys the system programs and the control programs for execution on the memory 52, thereby implementing various processes. As described later in detail, the processor 51, for example, updates access histories 71 of the monitored files P to S or generates transaction data for updating a distributed ledger 81.

While Fig. 2 shows the virtual server 31A as including only one processor, it should be noted that the virtual server 31A may include multiple processors. In other words, the virtual server 31A includes one or more processors. The same is true for the memory 52 and the storage 54. As used herein, the term "processor" is not limited strictly to a processor that performs processes in a stored-program manner, and can include hardwired circuits such as an application specific integrated circuit (ASIC) or a field-programmable gate array (FPGA). Therefore, the term "processor" can be read as a processing circuit (circuitry or processing circuitry) whose process is predefined by computer-readable code and/or a hardwired circuit.

The communication device 53 communicates with external devices external to the virtual server 31A. The external device can include the platform server 1, the other virtual servers 31B to 31D, the user terminals 41A, the external servers 9, etc.

The storage 54 is a rewriteable memory device such as a HDD, a SSD, a flash memory, etc. The storage 54 stores a private key 61, multiple public keys 62, multiple access histories 71, and multiple distributed ledgers 81.

The private key 61 is managed by the enterprise A. The public keys 62 include public keys of the enterprises B to D. The public keys 62 may include a public key of the enterprise A itself. For example, for the virtual server 31A to join the network NW for the first time, the processor 51 generates a private key and a public key. The processor 51, then, transmits the public key to a certificate authority (not shown) for authentication. The certificate authority issues an electronic certificate, including information on the public key. The processor 51 stores the private key 61 corresponding to the authenticated public key into the storage 54. The processor 51 also transmits the authenticated public key (the electronic certificate) 62 to the virtual servers 31B to 31D of the other enterprises B to D. Similarly, the virtual servers 31B to 31D transmit their own public keys to the virtual servers, other than themselves.

The access histories 71 are data indicating the access histories of the monitored files P to S (see Fig. 2). The access history 71 is one example of a "log data" according to the present disclosure. The access history 71 will be described in detail, with respect to Fig. 4.

The distributed ledgers 81 include multiple ledgers. Since each ledger has a chain structure (more specifically, a directed acyclic graph (DAG) structure), the ledger will also be described as a "chain" below. In Embodiment 1, for ease of understanding, two types of chains (described later) are prepared for each predetermined, monitored file. However, two types of chains may be prepared for each of multiple monitored files.

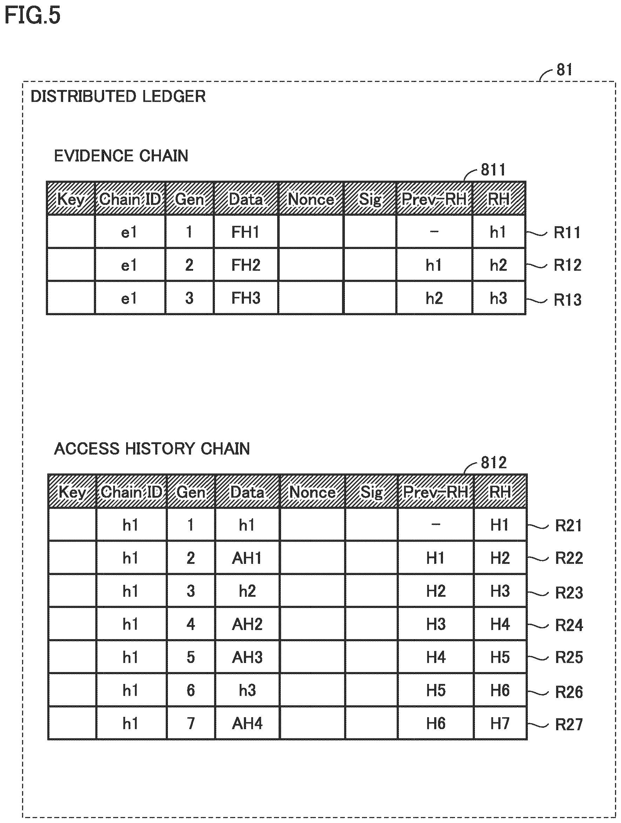

For example, as the virtual server 31A is requested from a user to update the distributed ledgers 81, the virtual server 31A updates one (an evidence chain 811 described later) of the two types of chains based on an up-to-date monitored file. Moreover, every time this one chain is updated or every time the access to the monitored file is sensed, the virtual server 31A also updates the other chain (an access history chain 812 described later), based on the access history 71. These chains will be described in detail with respect to Fig. 5.

Note that the virtual servers 31A to 31D each corresponds to a "data management apparatus" according to the present disclosure. The data management system 100 may include multiple physical servers (not shown), instead of the virtual servers 31A to 31D. In that case, each physical server corresponds to the "data management apparatus" according to the present disclosure.

The storage 54 of the virtual server 31A corresponds to both a "first storage" and a "second storage" according to the present disclosure. However, the "first storage" and the "second storage" may be implemented by separate devices.

In the following, the virtual servers 31A to 31D will be referred to as a "virtual server 31," omitting the reference signs A to D therefrom, unless otherwise distinguished. The same is true for the user terminals and the databases.

### <Access History>

Fig. 4 is a diagram illustrating one example of a data structure of the access history 71. Each record in the access history 71 includes, for example, a key (Key), a file ID (File ID), time (Time), a user (User), and an operation (Operation).

The key is an identifier of a record in the access history 71. The file ID is identification information of the accessed monitored file. The time is the time of access to the monitored file. The user is identification information (such as a device ID) of user equipment 41 that accessed the monitored file. The user may be identification information (such as a login name) of the user that accessed the monitored file. The operation is a type of operation performed on the monitored file by the user who accessed the monitored file (viewing, adding, registering updating, modifying, deleting, transmitting, downloading, etc. of the file).

### <Distributed Ledger>

Fig. 5 is a diagram illustrating one example of a data structure of the distributed ledger 81 according to Embodiment 1. The distributed ledger 81 includes, for example, multiple evidence chains 811, and multiple access history chains 812. Due to space constraints, Fig. 5 shows the two types of chains one chain for each. In Embodiment 1, one evidence chain 811 and one access history chain 812 are associated with each other. However, multiple evidence chains 811 may be associated with one access history chain 812.

The evidence chain 811 is a ledger storing, in time series, transaction data involving the monitored file. In this example, the evidence chain 811 includes three records R11, R12, and R13. Each record includes a key (Key), a chain ID (Chain ID), a generation (Gen), data (Data), a nonce (Nonce), an electronic signature (Sig), the previous record hash value (Prev-RH), and a record hash value (RH).

The key is an identifier of a record in the evidence chain 811.

The chain ID is identification information identifying the evidence chain 811. In this example, the Chain ID = e1 is assigned to the evidence chain 811. This allows the record where the Chain ID = e1 to be stored into the evidence chain 811.

The generation is information indicating an order of a record. The generation of the initial record is 1. The generation is, then, incremented each time a record is added with the update of the monitored file. In the following, the first (oldest) record will be described as an "initial record." The last (up-to-date) record will be described as a "terminal record."

Data stored in the evidence chain 811 is a hash value (hereinafter, described as a "file hash value") obtained by hashing the monitored file. As the monitored file is updated, the updated monitored file is hashed using a hash function and a hash value is thereby generated. The hash value is, then, stored into the evidence chain 811 as a file hash value. In this example, file hash values FH1, FH2, and FH3 are stored into the records R11, R12, and R13, respectively.

The nonce is a value indicating a transaction data number. For example, the nonce is used as a number for a process of storing the file hash value into the evidence chain 811 when the monitored file is updated.

The electronic signature is information for identity verification of the virtual server 31 from which the transaction data is issued. The electronic signature is generated by, for example, encrypting the file hash value with the private key 61 of the virtual server 31 from which the transaction data is issued.

The previous record hash value is a record hash value of a record (i.e., the parent record) one generation previous to the record.

The record hash value is a hash value of the record. The record hash value is generated by hashing the information (some or all of the key, chain ID, generation, data, nonce, electronic signature, and previous record hash value) of the record, except for the record hash value, using the hash function.

The terminal record (the record having Gen = 3) R13 of the evidence chain 811 has a record hash value of "h3." The previous record hash value of the terminal record R13 is "h2," which is the record hash value of the parent record (the record having Gen = 2) R12. The previous record hash value of the record R12 is "h1," which is the record hash value of the parent record (the record having Gen = 1) R11.

In this manner, in the evidence chain 811, multiple records are chained by each record including the previous record hash values.

The access history chain 812 is a ledger storing, in time series, transaction data involving the access history 71. In this example, the access history chain 812 includes seven records R21, R22, R23, R24, R25, R26, and R27. Similarly to the records in the evidence chain, each record includes a key, a chain ID, a generation, data, a nonce, an electronic signature, the previous record hash value, and a record hash value.

While the data in the evidence chain 811 is the file hash value generated from the monitored file, the data in the access history chain 812 is a history hash value or a terminal hash value.

The history hash value is a hash value that is obtained by hashing the access history 71 when transaction data is stored into the evidence chain 811 (when a record is added), or when access to the monitored file is sensed. In this example, four records R22, R24, R25, and R27 store history hash values AH1, AH2, AH3, and AH4, respectively. The history hash value corresponds to a "log hash value" according to the present disclosure. However, if data that is generated by data conversion of the access history 71 is stored into the access history chain 812, the data conversion technique is not limited to hashing.

The terminal hash value is, for example, a record hash value of the terminal record in the evidence chain 811 after the data processing is performed on the monitored file (such as addition, registration, modification, update, deletion, etc. of the monitored file) and the evidence chain 811 is updated accordingly. In this example, the record R21 stores the record hash value "h1" of the record R11 stored in the evidence chain 811. The record R23 stores the record hash value "h2" of the record R12 stored in the evidence chain 811. The record R26 stores the record hash value "h3" of the record R13 stored in the evidence chain 811.

Data included in the access history chain 812, other than the above, is the same as corresponding data of the evidence chain 811, and a detailed description thereof is, thus, not be repeated. The evidence chain 811 corresponds to a "first ledger" according to the present disclosure. The access history chain 812 corresponds to a "second ledger" according to the present disclosure.

As such, the virtual server 31A generates transaction data so that the history hash value is associated with the terminal hash value of the evidence chain 811, and stores the transaction data into the access history chain 812. This ties the evidence chain 811 and the access history chain 812 together. In the following, the processes in these two chains will be set forth in time series to describe the relationship between the two chains in detail.

### <Relationship Between Two Chains>

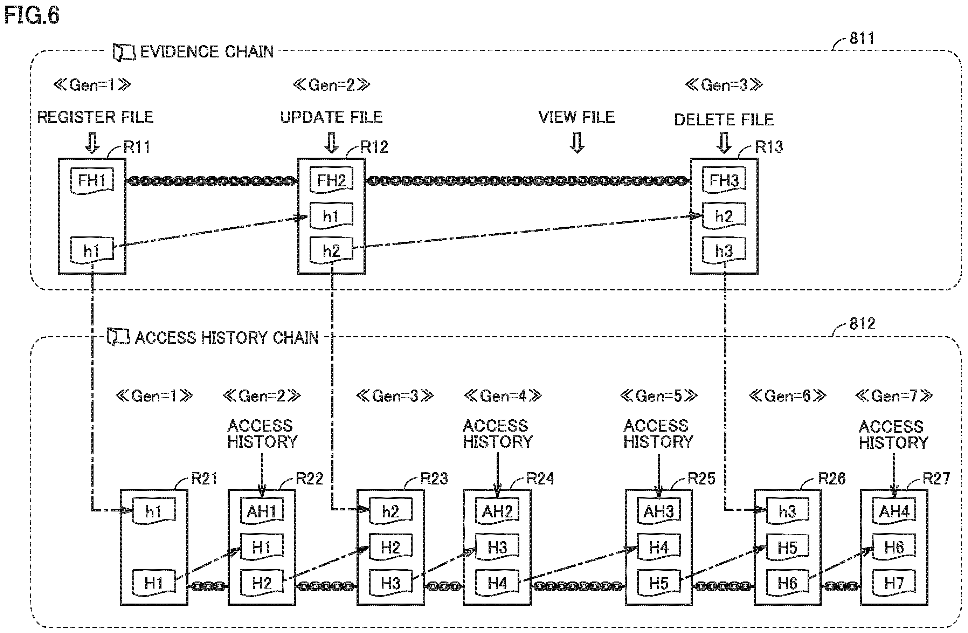

Fig. 6 is a schematic diagram for illustrating a relationship between records stored in the evidence chain 811 and the access history chain 812.

### <<Gen of Evidence Chain = 1»

Initially, assume that a monitored file P (hereinafter, abbreviated as a "file P") shown in Fig. 2 is registered with the database 21A according to operations by a certain user belonging to the enterprise A. The virtual server 31A generates transaction data for adding the first-generation (Gen = 1) record R11 to the evidence chain 811. The record R11 includes the file hash value FH1 generated by hashing the file P, and the record hash value h1 generated by hashing the various information in the record R11.

The virtual server 31A transmits the generated transaction data to the network NW. The process of execution of the transaction data (the transaction process) is performed at the virtual servers 31A to 31D to add the record R11 to the respective evidence chains 811 at the virtual servers 31A to 31D and the multiple external servers 9. These processes involving all the virtual servers 31A to 31D are the same for the subsequent generations of the evidence chains 811 (and the access history chains 812) , and a detailed description thereof is, thus, not be repeated.

### <<Gen of Access History Chain = 1, 2>>

In response to the evidence chains 811 being updated or the access to the file P, which is the registration of the file P, being sensed, the virtual server 31A generates transaction data for adding the first-generation record R21 to the access history chain 812. The record R21 includes the terminal hash value (the record hash value of the record R11 which is the terminal record in the evidence chain 811) h1 of the evidence chain 811 at that time point, and the record hash value H1 generated by hashing the information in the record R21.

In addition, the virtual server 31A generates transaction data for adding the second-generation record R22 to the access history chain 812. The record R22 includes: the history hash value AH1 generated from the access history 71 including the information on the registration of the file P; the previous record hash value H1; and the record hash value H2 generated by hashing the various information in the record R22.

### <<Gen of Evidence Chain = 2»

Subsequently, assume that the file P is updated on the database 21A. This update may be conducted by a user who has registered the file P (the user of the enterprise A) or conducted by a user different from that user (e.g., other user within the enterprise A or a user of any of the other enterprises B to D). The virtual server 31A generates transaction data for adding the second-generation record R12 to the evidence chain 811. The record R12 includes: the file hash value FH2 that is generated from the updated file P; the previous record hash value h1; and the record hash value h2 that is generated by hashing the various information in the record R12.

### <<Gen of Access History Chain = 3, 4»

In response to the evidence chain 811 being updated, or the access to the file P, which is the update of the file P, being sensed, the virtual server 31A generates transaction data for adding the third-generation record R23 to the access history chain 812. The record R23 includes: the terminal hash value (the record hash value of the record R12 in the evidence chain 811) h2 of the evidence chain 811 at that time point; the previous record hash value H2; and the record hash value H3 that is generated by hashing the various information in the record R23.

In addition, the virtual server 31A generates transaction data for adding the fourth-generation record R24 to the access history chain 812. The record R24 includes: the history hash value AH2 that is generated from the access history 71 including the information on the updating of the file P; the previous record hash value H3; and the record hash value H4 that is generated by hashing the various information in the record R24.

### <<Gen of Access History Chain = 5»

Furthermore, assume that the file P has been viewed on the database 21A (however, no modification has been made to the file P itself). In response to the access to the file P, which is the viewing of the file P, being sensed, the virtual server 31A generates transaction data for adding the fifth-generation record R25 to the access history chain 812. The record R25 includes: the history hash value AH3 that is generated from the access history 71 including the information on the viewing of the file P; the previous record hash value H4; and the record hash value H5 that is generated by hashing the various information in the record R25.

### <<Gen of Evidence Chain = 3»

Subsequently, assume that the file P has been deleted from the database 21A. The virtual server 31A generates transaction data for adding the third-generation record R13 to the evidence chain 811. The record R13 includes: the file hash value FH3 regarding the deleted file P; the previous record hash value h2; and the record hash value h3 that is generated by hashing the various information in the record R13.

### <<Gen of Access History Chain = 6, 7»

In response to the evidence chain 811 being updated, or the access to the file P, which is the deletion of the file P, being sensed, the virtual server 31A generates transaction data for adding the sixth-generation record R26 to the access history chain 812. The record R26 includes: the terminal hash value (the record hash value of the record R13 in the evidence chain 811) h3 of the evidence chain 811 at that time point; the previous record hash value H5; and the record hash value H6 that is generated by hashing the various information in the record R26.

In addition, the virtual server 31A generates transaction data for adding the seventh-generation record R27 to the access history chain 812. The record R27 includes: the history hash value AH4 that is generated from the access history 71 including the information on the deletion of the file P; the previous record hash value H6; and the record hash value H7 that is generated by hashing the various information in the record R27.

In this manner, in Embodiment 1, all the records are chained by each record (excluding the initial record) including the previous record hash value, in the evidence chain 811. Due to this, in order to tamper the file hash within any record, all the records that are added after that record need to be tampered. Such tempering, however, is unrealistic. The same is true for the access history chain 812. Thus, according to Embodiment 1, the monitored file can be verified to be untamperable, and, additionally, that the access history 71 can be verified to be untamperable.

If someone attempts unauthorized use of the monitored file (such as a false entry, rewriting, deletion, scrambling, transmission, download, etc.), such an attempt will be recorded in the access history 71. Then, since the access history 71 is substantially untamperable, the trace of the unauthorized use is not erasable. Accordingly, the authenticity of the monitored file and the access history 71 can be ensured. In addition, making it known that the authenticity of the access history 71 is ensured acts as a deterrent for unauthorized use the monitored file P, thereby reducing the possibilities for unauthorized use of the monitored file P.

### <Flow for Access History Chain>

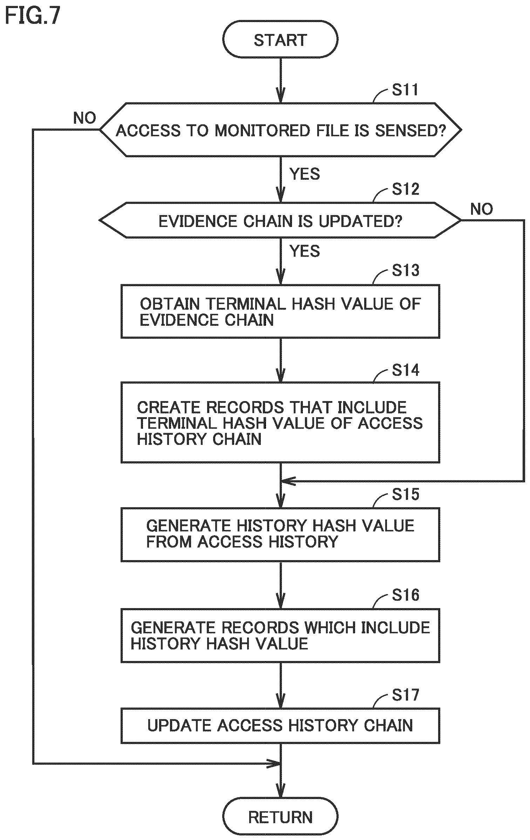

Fig. 7 is a flowchart illustrating one example of a procedure of the process of updating of the access history chain 812 according to Embodiment 1. The process illustrated in this flowchart is invoked from the main routine for execution, when predetermined conditions are met (e.g., every predetermined control cycle). Each process step is implemented by software processing by the virtual server 31 (the processor 51). However, each process step may be implemented by hardware (an electric circuit) disposed within the virtual server 31. Hereinafter, a respective step will be abbreviated as S.

In S11, the virtual server 31 determines whether an access to the monitored file is sensed. If the access is not sensed (NO in S11), the virtual server 31 returns the process to the main routine. If the access is sensed (YES in S11), the virtual server 31 passes the process to S12.

In S12, the virtual server 31 determines whether an evidence chain 811 corresponding to the monitored file the access thereto has been sensed is updated. If the evidence chain 811 is updated through registration, modification, deletion, etc. of the monitored file (YES in S12), the virtual server 31 passes the process to S13.

In S13, the virtual server 31 obtains the terminal hash value of the updated evidence chain 811. Then, in S14, the virtual server 31 generates records (see R21, R23, and R26 of Figs. 5 and 6) for the access history chain 812, which include the terminal hash value obtained in S13, the previous record hash value, and the new record hash value (S14). However, the initial record does not include the previous record hash value. Subsequently, the virtual server 31 passes the process to S15.

If the monitored file is only viewed, transmitted, or downloaded, without the evidence chain 811 being updated in S12 (NO in S12), the virtual server 31 skips S13 and S14 and passes the process to S15.

In S15, the virtual server 31 generates a history hash value from the access history 71. Then, the virtual server 31 generates records (see R22, R24, R25, and R27 of Figs. 5 and 6) for the access history chain 812, which include the history hash value generated in S15, the previous record hash value, and the new record hash value (S16). However, the initial record does not include the previous record hash value.

In S17, the virtual server 31 adds the newly generated one or two records to the access history chain 812 to update the access history chain 812.

As described above, in Embodiment 1, the evidence chain 811 and the access history chain 812 are substantially untamperable. Accordingly, the trace of unauthorized use of the monitored file is certainly recorded in the access history 71. Thus, unauthorized use of the monitored file can be inhibited and the authenticity of the access history 71 can be ensured.

In addition, since all the records are chained in the evidence chain 811, the order of all the records stored in the evidence chain 811 is uniquely identified. Thus, according to Embodiment 1, the ordering of the monitored file can be verified. Similarly, the ordering of the access history 71 in the access history chain 812 can be verified.

### [Embodiment 2]

In Embodiment 1, the example has been described in which the distributed ledger 81 (the access history chain 812) is generated based on the history of user access to the monitored file. In Embodiment 2, an example will be described in which a distributed ledger is generated based on a history (log) of data collection from a device.

### <System Configuration>

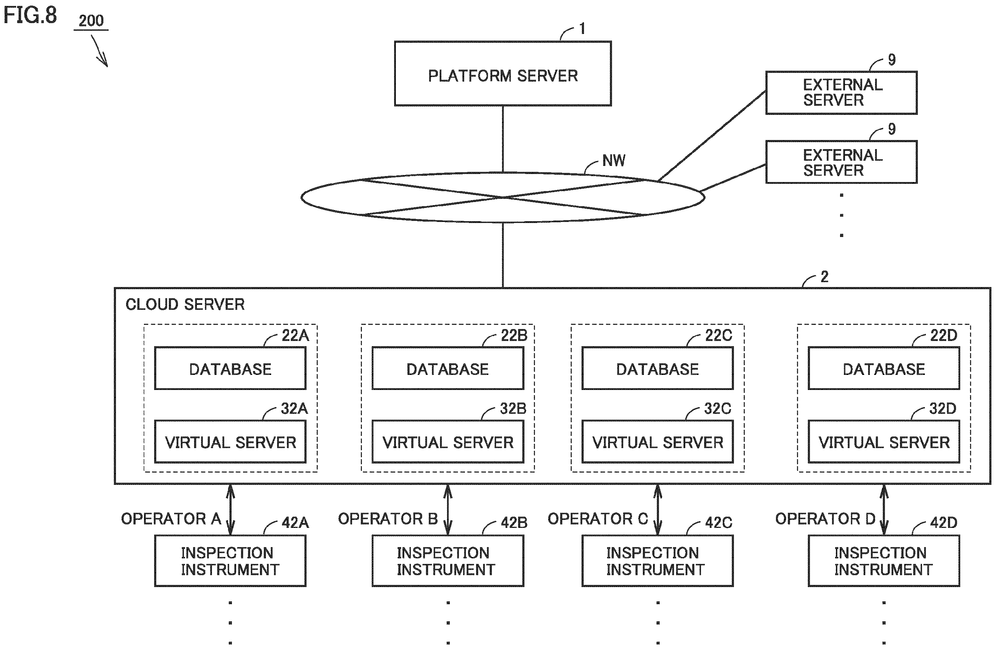

Fig. 8 is a diagram illustrating one example of an overall configuration of the data management system according to Embodiment 2 of the present disclosure. A data management system 200 is the same as the data management system 100 (see Fig. 1) according to Embodiment 1, except that a cloud server 2 includes databases 22A, 22B, 22C, and 22D and virtual servers 32A, 32B, 32C, and 32D, instead of the databases 21A to 21D and the virtual servers 31A to 31D, and the cloud server 2 is connected to multiple inspection instrument 42A, 42B, 42C, and 42D, instead of the user terminals 41A to 41D.

The inspection instrument 42A to 42D are used by, for example, operators inspecting vehicles (maintenance). The inspection instrument 42A generates inspection data indicating a result of inspection of a vehicle, and stores the inspection data into the database 22A. The same is true for the other inspection instrument 42B to 42D.

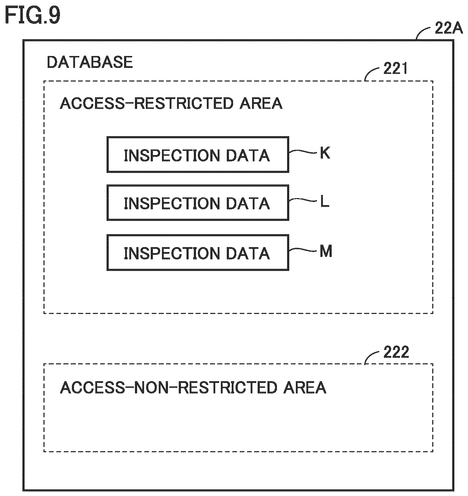

Fig. 9 is a diagram illustrating one example of a configuration of the database 22A according to Embodiment 2. The database 22 includes an access-restricted area 221 storing multiple inspection data K to L, and an access-non-restricted area 222. Access-restricted areas having different access restriction levels may be provided.

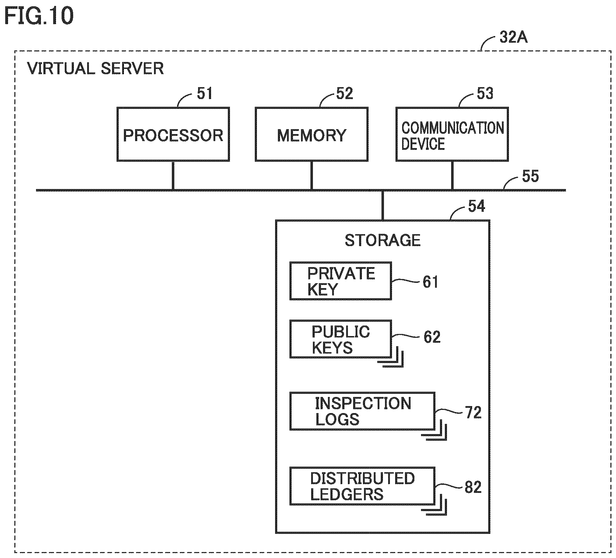

Fig. 10 is a diagram illustrating one example of a configuration of the virtual server 32A according to Embodiment 2. The virtual server 32A is the same as the virtual server 31A (see Fig. 3) according to Embodiment 1, except for including a storage 54 storing inspection logs 72 and distributed ledgers 82, instead of the access histories 71 and the distributed ledgers 81.

The other configuration of the data management system 200 is the same as a corresponding configuration of the data management system 100 according to Embodiment 1, and a detailed description thereof is, thus, not be repeated.

Note that the inspection data is one example of a "monitored file" according to the present disclosure. The inspection instrument 42A to 42D are one example of a "device" according to the present disclosure. The "device" is not particularly limited, insofar as it is capable of obtaining some sort of data and outputting the data externally (what is called, IoT (Internet of Things) device). The "device" may be, for example, inspection instrument for industrial products other than vehicles, inspection instrument for foods (agricultural produce, livestock products, aquatic products, etc.), or medical diagnostic equipment.

### <Inspection Log>

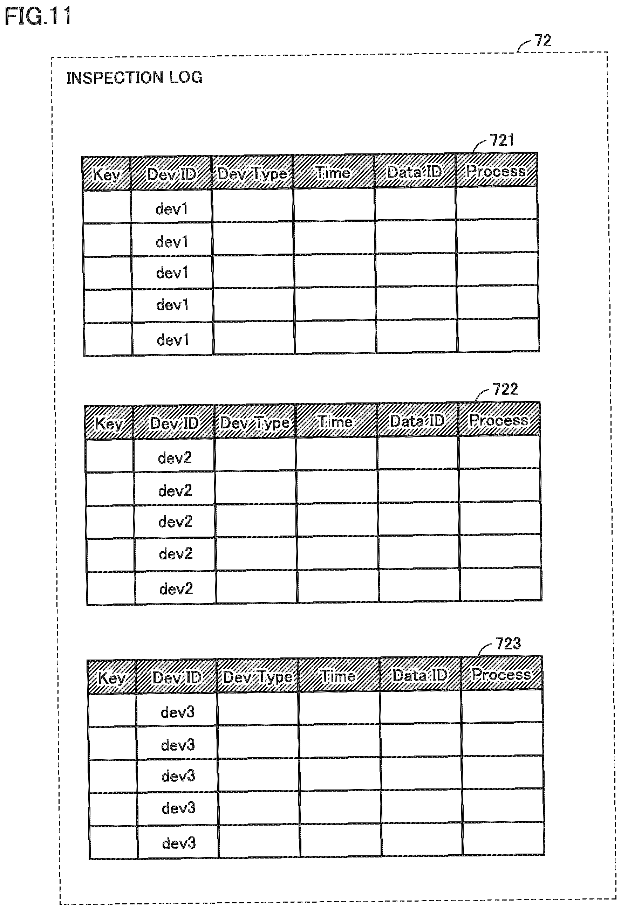

Fig. 11 is a diagram illustrating one example of a data structure of the inspection log 72. Each record in the inspection log 72 includes, for example, a key (Key), a device ID (Dev ID), a device type (Dev Type), a collection time (Time), a data ID (Data ID), and a process (Process).

The key is the identifier of a record in the inspection log 72. The device ID is the identification information (IDs) of the inspection instrument 42A to 42D. The device type is information indicating the type of inspection instrument (the model of the inspection instrument, etc.). The collection time is a time at which the inspection data are collected from the inspection instrument 42A to 42D to the database 22A. A record in the inspection log 72 may include the time of inspection of a vehicle (i.e., a time of generation of the inspection data) by the inspection instrument 42A to 42D, instead of the collection time. The data ID is identification information of the inspection data. The process is a type of data processing that is performed on the inspection data (such as addition, registration, modification, update, deletion, etc. of the inspection data).

In the inspection log 72, results of inspection may be separately managed for each inspection instrument. In the example shown in Fig. 11, the inspection log 72 includes three histories 721 to 723. The histories 721 to 723 store information on the inspection instrument that are given dev1, dev2, and dev3, respectively, as the device IDs. The inspection log 72 is another example of the "log data" according to the present disclosure.

### <Distributed Ledger>

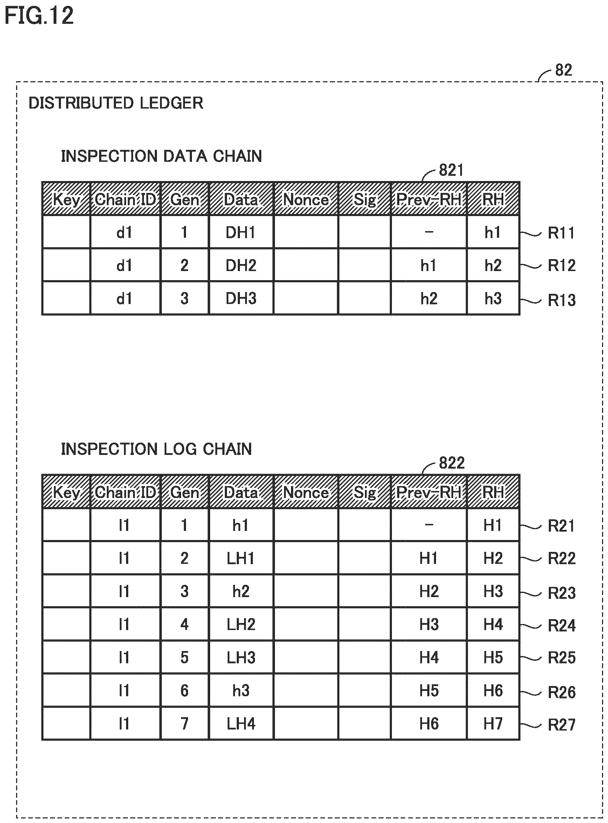

Fig. 12 is a diagram illustrating one example of a data structure of the distributed ledger 82 according to Embodiment 2. A distributed ledger 82 includes, for example, multiple inspection data chains 821, and multiple inspection log chains 822.

The inspection data chain 821 is a ledger storing, in time series, transaction data involving the inspection data. Similarly to each record in the evidence chain 811 (see Fig. 5), each record in the inspection data chain 821 includes, for example, a key, a chain ID, generation, data, a nonce, an electronic signature, the previous record hash value, and a record hash value.

The data in the inspection data chain 821 is a hash value (hereinafter, described as an "inspection hash value") generated from the inspection data. As the inspection data is updated, the updated inspection data is hashed to generate a hash value, which is stored into the inspection data chain 821 as an inspection hash value.

The inspection log chain 822 is a ledger storing, in time series, transaction data involving the inspection log 72 of the inspection data. Preferably, the inspection log chain 822 is provided for each inspection instrument (each inspection data managed by inspection instrument). Similarly to the records in the inspection data chain 821, each record in the inspection log chain 822 includes a key, a chain ID, a generation, data, nonce, an electronic signature, the previous record hash value, and a record hash value.

The data in the inspection log chain 822 is a log hash value or a terminal hash value. The log hash value is a hash value that is generated from the inspection log 72 when the inspection data chain 821 is updated or the data processing on the inspection data (such as addition, registration, modification, update, deletion, etc. of the inspection data) is sensed. The terminal hash value is a record hash value of the terminal record in the inspection data chain 821 at a time point a user operation requesting for the update of the inspection data chain 821 is performed after the execution of the data processing on the inspection data, for example.

Information included in the inspection log chain 822, other than the above, is the same as corresponding information in the inspection data chain 821, and a detailed description thereof is, thus, not be repeated. The inspection data chain 821 corresponds to a "first ledger" according to the present disclosure. The inspection log chain 822 corresponds to a "second ledger" according to the present disclosure.

### <Relationship Between Two Chains>

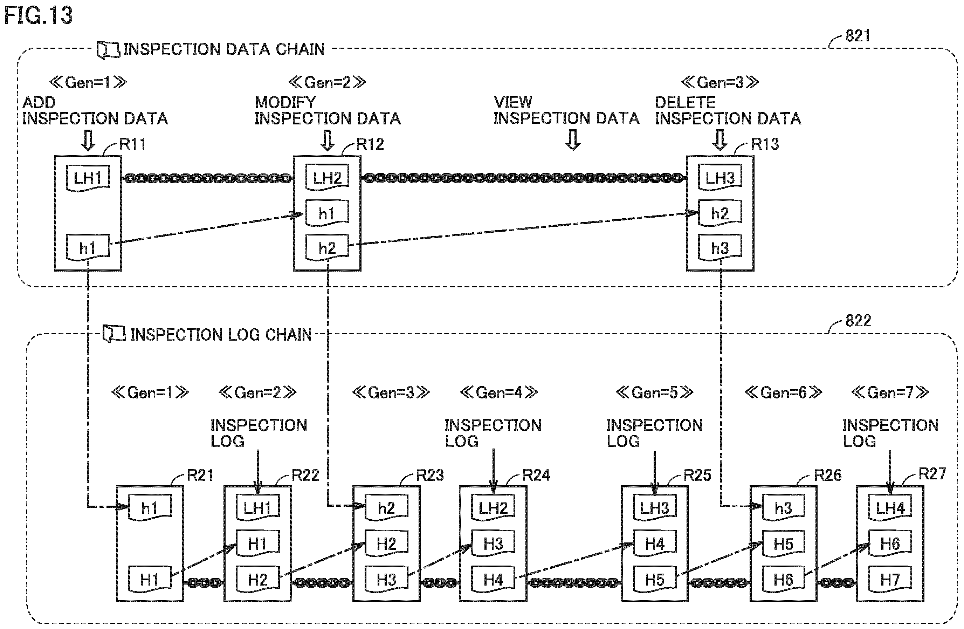

Fig. 13 is a schematic diagram for illustrating a relationship between records stored in the inspection data chain 821 and the inspection log chain 822. The process illustrated in the schematic diagram is similar to the process according to Embodiment 1 (see Fig. 6) if the access to the monitored file is read as the data processing on the inspection data, and a detailed description thereof is, thus, not be repeated.

### <Flow for Inspection Log Chain>

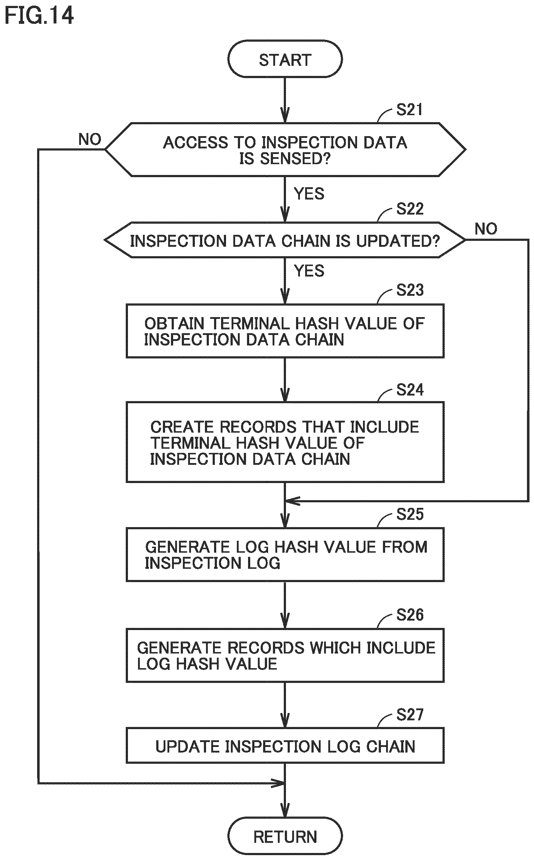

Fig. 14 is a flowchart illustrating one example of the procedure of a process of update of the inspection log chain 822 according to Embodiment 2. The process illustrated in the flowchart is similar to the process according to Embodiment 2 (see Fig. 7) if the access to the monitored file is read as the data processing on the inspection data, and a detailed description thereof is, thus, not be repeated.

As described above, in Embodiment 2, the inspection data chain 821 and the inspection log chain 822 are, substantially, untamperable, similarly to Embodiment 1. Thus, the inspection log 72 is untamperable too. If someone attempts unauthorized use of the inspection data (such as rewriting), such an attempt will be recorded in the inspection log 72, and the trace of the unauthorized use is not erasable. Accordingly, the unauthorized use of the inspection data can be inhibited, and the authenticity of the inspection log 72 can be ensured.

While the embodiments according to the present disclosure has been described above, the embodiments presently disclosed should be considered in all aspects illustrative and not restrictive. The scope of the present disclosure is defined by the appended claims. All changes which come within the meaning and range of equivalency of the appended claims are to be embraced within their scope.

## Claims

1. A data management apparatus (31A), comprising:
a first storage (54) storing a log data indicating an occurrence of an event involving a monitored file (P to S);
a second storage (54) storing a distributed ledger (81); and
a processor (51) that updates the distributed ledger (81), wherein
the processor (51) stores transaction data generated from the log data into the distributed ledger (81).

2. The data management apparatus (31A) according to claim 1, wherein
the processor (51) includes a log hash value, obtained by hashing the log data, into the transaction data.

3. The data management apparatus (31A) according to claim 2, wherein
the distributed ledger (54) includes a first ledger (821) and a second ledger (822), wherein
the processor (51):
stores, into the first ledger (821), an other transaction data which includes a file hash value obtained by hashing the monitored file (P to S); and
generates the transaction data so that the log hash value is associated with a hash value obtained by hashing data included in the other transaction data, and stores the transaction data into the second ledger (822).

4. The data management apparatus (31A) according to claim 3, wherein each time the other transaction data is stored into the first ledger (821), the processor (51) generates and stores the transaction data into the second ledger (822).

5. The data management apparatus (31A) according to claim 3, wherein
each time an occurrence of the event is sensed, the processor (51) generates and stores the transaction data into the second ledger (822).

6. The data management apparatus (31A) according to any one of claims 1 to 5, wherein
the event is access to the monitored file (P to S), and
the log data indicates an access history to the monitored file (P to S).

7. The data management apparatus (31A) according to claim 6, wherein the access history includes user information indicating a user accessed the monitored file (P to S), and a time of the access to the monitored file (P to S).

8. The data management apparatus (31A) according to claim 7, wherein the access history further includes a type of operation performed on the monitored file (P to S) by the user.

9. The data management apparatus (31A) according to claim 7, wherein the processor:
restricts access to a specific area of a storage area for the log data in the first storage (54); and
provides each user distinguished by the user information with permission to access the specific area.

10. The data management apparatus (31A) according to any one of claims 1 to 5, wherein
the monitored file (P to S) is data collected from a device (42A to 42D), and
the log data indicates historical collection of the monitored file (P to S).

11. The data management apparatus (31A) according to claim 10, wherein
the historical collection includes identification information identifying the device (42A to 42D), and a time of collection of the data from the device (42A to 42D).

12. The data management apparatus (31A) according to claim 11, wherein
the processor (51) manages the distributed ledger (81) for each device distinguished by the identification information.

13. A data management method using a distributed ledger technology, the data management method comprising:
obtaining, by a processor (51), log data indicating an occurrence of an event involving a monitored file;
generating, by the processor (51), transaction data from the log data; and
storing, by the processor (51), the transaction data into the distributed ledger (81).
